Europäisches Patentamt

European Patent Office

Office européen des brevets

(11) Publication number: **0 061 918**
**B1**

# EUROPEAN PATENT SPECIFICATION

(45) Date of publication of patent specification: **18.09.85**

(51) Int. Cl.⁴: **G 02 C 13/00**

(21) Application number: **82301629.0**

(22) Date of filing: **29.03.82**

(54) **Method of manufacturing spectacles.**

(30) Priority: **27.03.81 JP 44778/81**

(43) Date of publication of application:
**06.10.82 Bulletin 82/40**

(45) Publication of the grant of the patent:
**18.09.85 Bulletin 85/38**

(84) Designated Contracting States:
**BE DE FR GB IT NL SE**

(56) References cited:
**DE-A-2 747 828**
**DE-B-1 132 745**
**FR-A-2 368 772**
**FR-A-2 375 617**
**US-A-3 598 977**
**US-A-4 228 685**

(73) Proprietor: **Hoya Lens Corporation**
**25, Kowada Itsukaichi-machi Nishitama-gun**
**Tokyo (JP)**

(72) Inventor: **Akaba, Hayao**
**18-12, Haijimacho-2-chome**
**Akishima-shi (JP)**
Inventor: **Wada, Toyoji**
**1050, Itsukaichi, Itsukaichicho**
**Nishitama-gun Tokyo (JP)**
Inventor: **Ii, Tadao**
**2913-7-326, Naramachi**
**Midori-ku Yokohama (JP)**
Inventor: **Namatame, Hideo**
**105-7, Yano**
**Ome-shi (JP)**

(74) Representative: **Blanco White, Henry Nicholas**
**et al**
**ABEL & IMRAY Northumberland House 303-306**
**High Holborn**
**London WC1V 7LH (GB)**

Courier Press, Leamington Spa, England.

## Description

The present invention relates in general to a method of manufacturing spetacles, and especially to a method of fabricating glasses or spectacles which method includes the steps of measuring a lens model or pattern representative of the shape and size of a spectacle-frame into which the finished lens is to be fitted, inputting the information obtained from the lens model or pattern and optomertrical information prescribed by an opthalmologist or eye doctor into a computer, processing the information from both of those sources in accordance with a predetermined automatic lens-designing program, preparing the lens on the basis of the design data or processing information thus obtained by cutting, abrading and/or the like processing, and fitting the lens thus finished into a spectacle-frame.

In order to produce spectacles or glasses in accordance with a prescription prepared by an opthalmologist or eye doctor so that the spectacles are comfortable and provide visual aid to the user, precise information on the frame to be used for the spectacles is indispensable in addition to the prescription prescribed by the eye doctor.

In previously proposed methods for the manufacture of spectacles, lens materials or raw lenses in the form of circular blanks having curved faces of predetermined optical powers and predetermined diameters (for example, 60 mm, 65 mm and 70 mm) are kept in stock. The blanks may be labelled with their diameter to facilitate commercial handling. For preparation of the lens, a selected one of the raw lenses is shaped to the correct outline to fit in a selected frame, by using a corresponding lens model, and assembled with the frame.

Hitherto known methods of preparting lenses for fitting into a selected frame suffer various short-comings among which the following can be mentioned:

1) The extra portion of the lens material which has to be removed when preparing the specific lens is also prepared optically as part of the effective lens.

2) If the lens is convex, it tends to show very thick edges, and to be heavy and lacking in smartness. Thus, the finished spectacles are not always comfortable for the user to wear.

Accordingly, an object of the present invention is to provide a method of preparing lenses for spectacles which avoids the drawbacks of previous methods of lens preparation by measuring the configuration and size of the frame selected by a user and processing the measurement information as well as the optometrical information, with the aid of a computer, to produce lenses that have minimum edge thickness and hence spectacles that are light in weight and smart.

The invention provides a method of manufacturing a lens for spectacles on the basis of an automatic designing program, comprising the steps of: feeding prescribed optometrical information and frame information on a frame into which the finished lens is to be fitted into a computer suitable for running the said program; deriving óptimum lens design data with respect to edge thickness through processing of the said optometrical information and the said frame information by running the program; and preparing and finishing a lens by cutting, abrading or the like processing of a lens material in accordance with the said optimum lens design data.

When a lens is made by a method in accordance with the present invention, the following advantages can be obtained:

a) Lenses can be manufactured without unnecessary waste of optical glass.

b) The stocks of lens material (i.e. raw lenses) that must be kept can be reduced.

c) Spectacles can be made that are light in weight.

The required information on the selected frame is preferably obtained by measuring a corresponding model or pattern of the shape of the lens or frame. The lens is then prepared in accordance with the frame information and the prescription prepared by an eye doctor in such a way as to produce a lens of minimum edge thickness that can be snugly fitted in the selected frame to assure that the assembled spectacles weigh as little as possible.

One previously known method of preparing spectacle lenses, one method in accordance with the present invention, and apparatus suitable for use with the latter method will now be described by way of example with reference to the accompanying drawings, in which:

Fig. 1 is a diagrammatic view of a lens prepared by a previously known method;

Fig. 2 is a diagrammatic view of a lens prepared by a method in accordance with the present invention;

Fig. 3 is a diagrammatic view of an apparatus for measuring a lens model used in carrying out the method according to the invention; and

Fig. 4 is a block diagram showing a circuit arrangement of an auomatic lens design system for carrying out the method according to the invention.

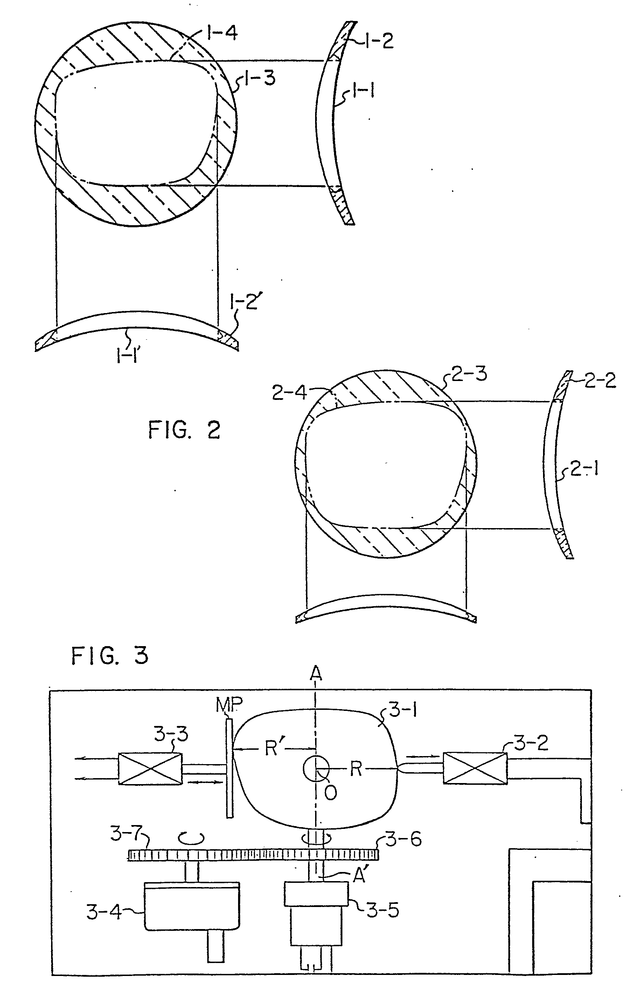

Referring to the drawing, and initially to Fig. 1, in a previously known method of making up a lens for glasses or spectacles, a peripheral edge portion of a lens 1—3 that has previously been ground to the desired optical power and polished, and has a predetermined diameter, is abraded away or otherwise removed to copy the profile of a lens model 1—4, removing portions 1—2 and 1—2' indicated by the hatched areas in Fig. 1, so that the finished lens can be fitted into a rim or frame corresponding to the model. Thus, in the case of lenses for spectacles and in particular in the case of convex lenses, the processed lens presents a peripheral edge thicker than that of the raw lens. Spectacles prepared from such lenses fitted in a frame are not only lacking in smartness but heavy in weight, imposing a burden on the user. In an effort to avoid these disadvantages, it has been proposed to start the lens processing from a raw lens having a smaller diameter. However, that means that the selection of the frame or rim is undesirably restricted, making it difficult or impractical to use the larger frames that are now in fashion.

Accordingly, it is contemplated with the invention to provide apparatus for measuring with a high accuracy the lens model or frame model by which information from the lens model concerning its shape and size are fed into a computer together with optometrical information obtained from an eye-test and examination on the user to determine numerically various optical characteristics such as the spherical power, cylindrical power, prism power, cylinder axis, decentralization and so forth in accordance with a design program stored in the computer. The lens is ground to the correct optical curvature and its edge is abraded to the correct profile in accordance with the data thus obtained to prepare a lens having an optimal thickness and thus suited for fitting into a desired frame, as is illustrated in Fig. 2.

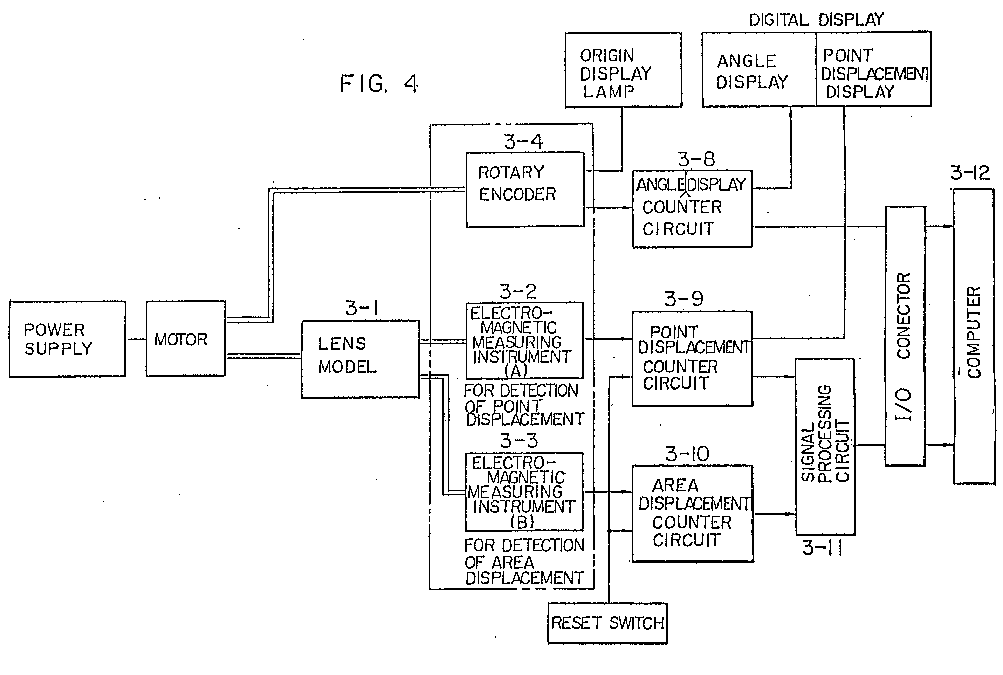

Referring now to Figs. 3 and 4, in one method of measuring the shape and size of a lens model or profile model according to the teaching of the present invention the shape and size or dimensions of the selected frame are copied in a lens model (usually made of a flat plastics plate) which is then fixed on a lens-model supporting plate (not shown) disposed above a motor 3—5. Electromagnetic length-measuring scale instruments 3—2 and 3—3 are then brought into contact with peripheral edge portions of the lens model. In this case, care should be taken that the lens model is positioned in a predetermined starting disposition. Usually, the lens model is located with the side corresponding to the upper side of the lens in use at the top. Subsequently, a power supply circuit shown in Fig. 4 is closed to initiate the operation of the motor 3—5 linked with the lens model. The rotation angle of the motor shaft is detected by a rotary encoder 3—4, which is operatively coupled to a gear wheel 3—6 mounted fixedly on the motor shaft by way of an interposed gear wheel 3—7, and is supplied to a computer using an angle counter circuit 3—4. The length measuring instruments are held continuously in contact with the periphery of the rotating lens model and are arranged to measure the distance R between the centre and the periphery of the lens model as well as the distance R' between the meridian (A—A') and a scale plate MP connected to the electromagnetic measuring instrument 3—3, as the result of which detection signals representative of the point displacement (R) and the area displacement (R') are produced from the electromagnetic measuring instruments 3—2 and 3—3. These detection signals are supplied to a signal processing circuit 3—11 by way of a counter circuit to be combined into a synthesized signal which is then supplied to the computer 3—12 together with the rotation-angle signal mentioned above.

Additionally, optometrical information obtained through eye-examination is converted into signals representative of the various optical characteristics mentioned above in accordance with a predetermined program to be used in the computer together with the measurement data derived from the measurements of the lens model for arithmetic operation executed in accordance with a previously prepared lens designing program to obtain data such as convex and concave curvatures, centre thickness eccentricity, diameter and the like required for processing the lens so that the minimum lens thickness can be attained. The making-up or processing of the lens is conducted on the basis of the data thus obtained. The finished lens then presents a minimum thickness and a minimum diameter and can be snugly fitted in a selected frame with only a minimum quantity of the material of the peripheral portion having to be abraded away.

In this way, the lens can be prepared with greater precision by virtue of the arithmetical processing of the measurement data and the optometrical data by the computer, and a lens is obtained that can fit snugly in the selected frame and is of light weight and smart appearance.

Fig. 4 shows, by means of a block diagram, a circuit arrangement for carrying out the method according to the invention with emphasis on the circuitry for measuring the lens model. The apparatus for measuring the lens model corresponding to a selected frame comprises a lens-model rotating unit, a detecting unit, and a display unit. Ends of movable contact rods of the electromagnetic measuring instruments 3—2 and 3—3 are brought into contact with the lens model in the manner described above, and data as required are read out from a digital display. As the motor is driven, the lens model is rotated slowly, and the contact rods of the electromagnetic measuring scale instruments are displaced as they follow the profile of the lens model. On the other hand, the rotation angle of the model with reference to a horizontal centre axis is recorded in multiples of an angular distance of 2° to 5°, while the linear displacements of the contact rods are measured by means of potentiometers or linear encoder. Thus, information on the lens model such as rotation angle, point displacement and area displacement are obtained in polar coordinate form. The circuit includes interfaces for directly loading data into the computer 3—12 in addition to the digital display and a digital printer so that the data processing can be carried out at a high speed in accordance with the automatic lens design program.

In this connection, it is noted that the preparation of the design data with only the prescription from the ophthalmologist is impossible. The appropriate lens can be satisfactorily designed only when the frame profile is considered in addition to the prescription from the ophthalmologist. The approximate expression adopted in the past is of no substantial use to this end. Accordingly, there exists a demand for the automatic lens design program which is so prepared as to allow high speed processing with enhanced accuracy.

The apparatus for measuring the lens model may be combined with an appropriate computer such as, for example, Model ICUA-AA available from Fujitsu Co. in Japan, by which the lens processing data table is prepared through arithmetic operation on the information obtained by measuring the lens model and the prescription data loaded in the computer. The raw lens is then cut and abraded on the basis of the data thus obtained to prepare spectacle-lenses that can be snugly fitted in a desired frame and have a minimum peripheral thickness.

## Claims

1. A method of manufacturing a lens for spactacles on the basis of an automatic designing program, characterized by the steps of: feeding prescribed optometrical information and frame information on a frame into which the finished lens is to be fitted into a computer suitable for running the said program; deriving optimum lens design data with respect to edge thickness through processing of the said optometrical information and the said frame information by running the program; and preparing and finishing a lens by cutting, abrading or the like processing of a lens material in accordance with the said optimum lens design data.

2. A method as claimed in claim 1, comprising: performing optometrical tests to obtain prescription data and encoding the said data to form the said prescribed optometrical information.

3. A method as claimed in claim 1 or claim 2, wherein the said frame information is generated by selecting a lens model and traversing selected portions of the model with electromechanical transducers to obtain electronically encoded information representative of the shape and dimensions of the said portions of the model.

4. A method as claimed in claim 3, wherein the said model is rotated and rotational information is generated and encoded as part of the said frame information.

5. A method as claimed in claim 3 or claim 4, wherein the said transducers comprise contact rods that engage the periphery of the model and are coupled to potentiometers or linear encoders.

## Patentansprüche

1. Verfahren zur Herstellung einer Linse für Brillen auf der Grundlage eines automatischen Entwurfsprogram, dadurch gekennzeichnet, daß vorgeschriebene optometrische Informationen und Gestellinformationen bezüglich eines Gestells, in das die fertige Linse eingesetzt werden soll, einem für die Durchführung des Programs geeigneten (elektronischen) Rechner eingespeist werden, optimale Linsen-Entwurfs- oder Konstruktionsdaten bezüglich der Randdicke durch Verarbeitung der optometrischen Informationen und der Gestellinformationen mittels einer Ausführung des Programs abgeleitet oder ermittelt werden und eine Linse durch Schneiden, Schleifen o. dgl. Bearbeitung an einem Linsenmaterial nach Maßgabe der optimalen Linsen-Entwurfsdaten hergestellt und endbearbeitet wird.

2. Verfahren nach Anspruch 1, dadurch gekennzeichnet, daß optometrische Prüfungen zur Gewinnung von Verschreibungsdaten durchgeführt und die Daten zur Bildung der vorgeschriebenen optometrischen Informationen kodiert werden.

3. Verfahren nach Anspruch 1 oder 2, dadurch gekennzeichnet, daß die Linseninformationen durch Wählen eines Linsenmodells und Durchlaufen (Abtasten) gewählter Abschnitte des Modells mittels elektromechanischer Wandler zwecks Gewinnung elektronisch kodierter Informationen bezüglich Form und Abmessungen dieser Abschnitte des Modells erzeugt werden.

4. Verafahren nach Anspruch 3, dadurch gekennzeichnet, daß das Modell gedreht wird und die Drehinformation erzeugt und als Teil der Gestellinformation kodiert wird.

5. Verfahren nach Anspruch 3 oder 4, dadurch gekennzeichnet, daß die Wandler Kontakstäbe umfassen, die am Umfang des Modells angreifen und mit Potentiometern oder Linearkodierern bzw. Linearstellungsgebern gekoppelt sind.

## Revendications

1. Procédé de fabrication d'une lentille pour lunettes sur la base d'un programme de réalisation automatique, caractérisé en ce qu'il consiste à introduire des informations d'optométrie prescrites et des informations de monture, sur une monture dans laquelle la lentille achevée doit être fixée, dans un ordinateur approprié pour exécuter ledit programme; déduire des données de réalisation de lentille optimales par rapport à l'épaisseur de bord en traitant lesdites informations d'optométrie et lesdites informations de monture en exécutant le programme; et préparer et achever une lentille en taillant, abrasant ou en exécutant un traitement analogue sur un matériau de lentille conformément auxdites données de réalisation de lentille optimales.

2. Procédé selon la revendication 1, comprenant l'exécution des contrôles optométriques pour obtenir des données de prescription et le codage desdites données afin de constituer les informations d'optométrie prescrites.

3. Procédé selon l'une quelconque des revendications 1 et 2, caractérisé en ce que lesdites informations de monture sont engendrées en choisissant un modèle le lentille et en traversant des parties sélectionnées du modèle avec des transducteurs électromécaniques pour obtenir des informations codées électroniquement représentant la forme et les dimensions desdites parties du modèle.

4. Procédé selon la revendication 3, caractérisé en ce que le modèle est mis en rotation et en ce que les informations de rotation sont engendrées et codées comme une partie desdites informations de monture.

5. Procédé selon l'une quelconque des revendications 3 et 4, caractérisé en ce que lesdits transducteurs comprennent des tiges de contact qui sont mises en contact avec la périphérie du modèle et qui sont couplées à des potentiomètres ou à des codeurs linéaires.

FIG. 2

FIG. 3

1

FIG. 4